# EUROPÄISCHE PATENTSCHRIFT

(11) **EP 3 303 026 B1**
(45) Veröffentlichungstag und Bekanntmachung des Hinweises auf die Patenterteilung: **27.02.2019**
(21) Anmeldenummer: 16717968.8
(22) Anmeldetag: 25.04.2016
(51) Int. Cl.: B60G 21/05, B60B 35/08, B60B 35/12, B60B 35/14, B62D 17/00

(54) **VERBUNDLENKERACHSE FÜR EIN FAHRZEUG**
TWIST-BEAM REAR AXLE FOR A VEHICLE
ESSIEU SEMI-RIGIDE POUR VÉHICULE

(30) Priorität: 01.06.2015 DE 102015210006
(43) Veröffentlichungstag der Anmeldung: 11.04.2018
(73) Patentinhaber: ZF Friedrichshafen AG, 88046 Friedrichshafen (DE)
(72) Erfinder: WULF, Markus, 32479 Hille (DE); HAGEMES, Joerg, 49086 Osnabrueck (DE)
(86) Internationale Anmeldenummer: PCT/EP2016/059155
(87) Internationale Veröffentlichungsnummer: WO 2016/192899

(56) Entgegenhaltungen:
- EP-A1- 2 727 753
- CA-A- 1 226 128
- DE-A1-102011 080 037
- FR-A1- 2 932 145
- FR-A1- 2 965 786
- JP-A- 2002 274 134
- KR-B1- 101 462 790
- US-A- 774 042
- US-A1- 2010 127 470
- US-A1- 2011 239 430

## Beschreibung

Die Erfindung betrifft eine Verbundlenkerachse für ein Fahrzeug gemäß dem Oberbegriff des Patentanspruchs 1.

Verbundlenkerachsen sind aus dem Stand der Technik seit vielen Jahren bekannt. Diese umfassen im Wesentlichen zwei Längslenker, die einander gegenüberliegend angeordnet und über einen Torsionsstab miteinander verbunden sind. Bezogen auf eine parallel zur Fahrzeuglängsachse (X-Achse) verlaufende Längsmittelebene sind die beiden Längslenker spiegelsymmetrisch zueinander ausgerichtet. Dabei dient der linke Längslenker zur Lagerung eines der Verbundlenkerachse zugeordneten linken Rades, und dient der rechte Längslenker zur Lagerung eines der Verbundlenkerachse zugeordneten rechten Rades. Wie beispielsweise aus dem koreanischen Patent KR 101462790 B1 bekannt, können in die Längslenker jeweils elektrische Antriebseinheiten, beispielsweise in Form einer Motor-Getriebeeinheit integriert sein, um auf diese Weise ein dem Längslenker zugeordnetes Rad antreiben zu können. Zur sicheren Aufnahme derartiger Antriebskomponenten weisen die Längslenker eine komplexe Gehäuseform auf, wozu diese beispielsweise im Sandgussverfahren hergestellt sind. Wie in dem zuvor genannten koreanischen Patent beschrieben, können die Längslenker mit dem Torsionsstab über eine Flanschverbindung zu einer eine Verbundlenkerachse bildenden Baueinheit montiert sein.

Bei Verbundlenkerachsen mit starrer Verbindung der Längslenker über den Torsionsstab bestehen hohe Toleranzanforderungen, um einen für die Verbundlenkerachse vorgegebenen Spurwinkel und/oder Sturzwinkel einzuhalten. Insbesondere wenn die Verbundlenkerachse als angetriebene Achse mit integrierten elektrischen Antriebseinheiten ausgeführt wird, lassen sich aufgrund erschwerter Bearbeitungsbedingungen die erforderlichen Fertigungstoleranzen nur mit erhöhtem Aufwand einhalten.

Es ist daher eine Aufgabe der vorliegenden Erfindung eine Verbundlenkerachse der eingangs genannten Art anzugeben, mit welcher sich an die Verbundlenkerachse gestellte Toleranzanforderungen durch verhältnismäßig geringen Aufwand einhalten lassen.

Die genannte Aufgabe wird gelöst durch eine Verbundlenkerachse gemäß dem Anspruch 1. Diese zeichnet sich dadurch aus, dass die Flanschverbindung zumindest ein Verbindungselement aufweist, dass um eine Stellachse drehbar und feststellbar ist, wobei an dem Verbindungselement wenigstens eine Flanschfläche ausgebildet ist, die gegenüber einer zur Stellachse des Verbindungselements senkrechten Ebene um einen Winkel geneigt ist, um die Winkellage zwischen Längslenker und Torsionsstab durch Drehen des Verbindungselements um die Stellachse beeinflussen zu können. Bei der erfindungsgemäßen Verbundlenkerachse kommt demnach zur Verbindung zwischen Längslenkern und Torsionsstab eine auf besondere Art gestaltete Flanschverbindung zum Einsatz. Dabei weist die Flanschverbindung ein Verbindungselement auf, das sich um eine Stellachse drehen und in verschiedenen Drehstellungen feststellen lässt. Aufgrund einer besonderen Geometrie des Verbindungselementes, wonach nämlich dieses eine Flanschfläche aufweist, die gegenüber einer zur Stellachse des Verbindungselements senkrechten Ebene eine leichte Schrägstellung aufweist, lässt sich durch Drehen des Verbindungselements um die Stellachse die Winkellage zwischen Längslenker und Torsionsstab auf einfache Weise beeinflussen und somit auf ein gewünschtes Maß einstellen.

Im Rahmen der Achsmontage, insbesondere nach Zusammenbau des Torsionsstabs mit den Längslenkern, lässt sich dies vorteilhaft ohne weitere Werkstückbearbeitung sowie ohne nachträgliches Hinzufügen von Ausgleichsbauteilen durchführen. Vorzugsweise ist das Verbindungselement dabei in verschiedenen Drehstellungen feststellbar, so dass sich verschiedene Winkellagen einstellen lassen. Bei dem Verbindungselement kann es sich grundsätzlich um jedwedes zu dem genannten Zweck geeignetes Bauteil handeln. Der am Verbindungselement vorgesehene Schrägungswinkel gegenüber der zur Stellachse senkrechten Ebene kann beispielsweise zwischen null Grad und zehn Grad, vorzugsweise zwischen null Grad und fünf Grad betragen. Durch Rotation des Verbindungselements um dessen Stellachse lassen sich der Sturzwinkel und/oder der Spurwinkel der Verbundlenkerachse einstellen. Zweckmäßigerweise lässt an jedem der beiden Längslenker eine Radachse zur Aufnahme eines Rades des Fahrzeugs lagern, so dass sich durch Verdrehen des Verbindungselements um die Stellachse ein Spurwinkel und/oder ein Sturzwinkel der Verbundlenkerachse beeinflussen lässt. Die Gestaltung einer solchen Radlagerung am Längslenker kann auf für sich gesehen bekannte Weise ausgeführt sein.

Hinsichtlich der Gestaltung des erfindungsgemäß vorgesehenen Verbindungselementes sind verschiedene Möglichkeiten denkbar. Gemäß einer vorteilhaften Weiterbildung der Erfindung ist das Verbindungselement Teil des Torsionsstabs selbst. In diesem Fall ist eine am Torsionsstab ausgebildete Flanschfläche um einen Winkel gegenüber einer zur Längsachse des Torsionsstabs senkrechten Ebene geneigt, wobei der Torsionsstab um dessen Längsachse drehbar und feststellbar ist. Das Verbindungselement kann somit quasi integraler Bestandteil des Torsionsstabs sein, so dass kein zusätzliches Bauteil anfällt und die Verbundlenkerachse einfach montierbar ist. Der Neigungswinkel gegenüber der zur Längsachse senkrechten Ebene kann beispielsweise zwischen null und zehn Grad, vorzugsweise zwischen null und fünf Grad betragen. Durch Rotation des Torsionsstabs um dessen Längsachse lassen sich der Sturzwinkel und/oder der Spurwinkel der Verbundlenkerachse einstellen. Im gewünschten Zustand ist es denkbar, die am Torsionsstab ausgebildete Flanschfläche mit der dem Längslenker zugeordneten Flanschfläche zu verschrauben, um die gewählte Winkellage fest einzustellen.

Gemäß einer alternativen oder ergänzenden Weiterbildung der Erfindung ist es denkbar, das Verbindungselement als ein bezogen auf den Torsionsstab und die Längslenker zusätzliches Bauteil in Form einer Winkelscheibe mit einer Flanschfläche auszuführen, die gegenüber einer zu einer Stellachse senkrechten Ebene um den Winkel geneigt ist. In diesem Fall handelt es sich bei dem Verbindungselement um ein zusätzliches, separates Bauteil mit einer bestimmten Geometrie, so dass sich durch Rotation des Bauteils eine Einstellung des Spur- und/oder Sturzwinkels durchführen lässt. Die dabei zum Einsatz kommende Winkelscheibe weist vorteilhaft eine keilähnliche Form auf, so dass sich durch Drehung der Scheibe die Winkellage zwischen Längslenker und Torsionsstab verändern lässt.

Vorteilhaft weist dabei die Winkelscheibe eine innere Flanschfläche zur Befestigung an dem Torsionsstab auf und eine äußere Flanschfläche zur mittelbaren oder unmittelbaren Befestigung an dem jeweiligen Längslenker. In diesem Fall handelt es sich bei der Winkelscheibe um ein zwischen Torsionsstab und Längslenker eingelegtes Verbindungselement. Als vorteilhaft ist dabei anzusehen, dass sich die Winkelscheibe mit geringem Aufwand bedarfsweise ersetzen lässt, beispielsweise um eine Winkelscheibe mit anderer Geometrie, insbesondere anderer Winkelneigung einzusetzen, oder dass die Winkelscheibe überhaupt wahlweise hinzugefügt oder entfernt werden kann.

Zur sicheren Befestigung der Winkelscheibe ist an dieser vorzugsweise eine Vielzahl umfänglich angeordneter Befestigungslöcher ausgebildet, die mit einer Vielzahl umfänglich angeordneter Befestigungslöcher korrespondiert, die an dem Torsionsstab und/oder an einer dem Längslenker zugeordneten Flanschfläche ausgebildet ist.

Ganz unabhängig von der Gestaltung des Verbindungselements (das heißt, ob Teil des Torsionsstabs und/oder separates Bauteil) kann die Anbindung an den Längslenker auf unterschiedliche Weise erfolgen. Gemäß einer vorteilhaften Weiterbildung weist die Flanschverbindung zwischen Torsionsstab und Längslenker eine dem Längslenker zugeordnete Flanschfläche auf, die an einer Hülse ausgebildet ist, wobei die Hülse einen vorzugsweise zylinderförmigen Abschnitt aufweist, der in eine am Längslenker ausgebildete Aufnahme einführbar und im eingeführten Zustand darin klemmbar ist, um eine kraftschlüssige Verbindung zwischen Hülse und Längslenker herzustellen. Die dem Längslenker zugeordnete Flanschfläche ist in diesem Fall also nicht unmittelbar am Längslenker ausgebildet, sondern an einem separaten Bauteil in Form einer Hülse oder dergleichen (auch ein Bolzen wäre denkbar), welches sich in eine am Längslenker ausgebildete Aufnahme einführen und dort vorzugsweise kraftschlüssig (somit einfach lösbar) fixieren lässt.

Diese Art der Anbindung bietet den Vorteil, dass sich die Hülse zur Einstellung einer Spurweite der Verbundlenkerachse verschieden weit in die Aufnahme des Längslenkers einführen und darin feststellen lässt. Damit ist auf einfache Weise neben einer Einstellmöglichkeit für Spurwinkel und Sturzwinkel eine Einstellung der Spurweite möglich. Es sei angemerkt, dass für das Feststellen der Hülse innerhalb der Aufnahme des Längslenkers verschiedene Möglichkeiten bestehen. Beispielsweise kann die Hülse in der Aufnahme mittels einer verschraubbaren Klemmeinrichtung lösbar geklemmt werden. Alternativ oder ergänzend ist eine stoffschlüssige Verbindung durch Kleben und/oder Schweißen denkbar.

Ein weiterer Vorteil einer solchen Hülse ist, dass auch diese als erfindungsgemäß vorgesehenes Verbindungselement dienen kann, indem die an der Hülse ausgebildete Flanschfläche gegenüber einer zur Längsachse der Hülse senkrechten Ebene um einen Winkel geneigt ist. Innerhalb der zylindrischen Aufnahme des Längslenkers lässt sich die Hülse um deren Längsachse (Stellachse) drehen, so dass hierdurch die Einstellung der Winkellage zwischen Längslenker und Torsionsstab möglich ist.

Alternativ zu einer Hülse sieht eine andere Ausgestaltung der Erfindung vor, dass die Flanschverbindung eine unmittelbar am Längslenker ausgebildete Flanschfläche umfasst. Durch die damit erzielte geringe Anzahl von Bauteilen ist damit der Montageaufwand für die Achse verringert.

Vorteilhaft ist es denkbar, dass die Flanschverbindung zwischen Längslenker und Torsionsstab mehrere, insbesondere zwei Verbindungselemente mit jeweils geneigter Flanschfläche aufweist. Hierdurch ergibt sich die Möglichkeit einer weitestgehend unabhängigen Einstellung von Spurwinkel und Sturzwinkel der Verbundlenkerachse, wenn die Verbindungselemente unabhängig voneinander um eine jeweilige Stellachse drehbar sind.

Der zum Einsatz kommende Torsionsstab kann auf grundsätzliche unterschiedliche Weisen gestaltet sein. Insbesondere wenn das erfindungsgemäß vorgesehene Verbindungselement Teil des Torsionsstabs ist, kann es zweckmäßig sein, den Torsionsstab als im Wesentlichen rotationssymmetrisches Bauteil auszuführen, um zu gewährleisten, dass dieser auch bei unterschiedlichen Drehstellungen bezogen auf dessen Längsachse eine gleiche Steifigkeit aufweist.

Damit sich das Verbindungselement in vorteilhafter Weise lösbar in verschiedenen Drehstellungen um die Stellachse feststellen lässt, kommt vorzugsweise eine formschlüssige oder eine kraftschlüssige Verbindung oder eine Kombination dieser Verbindungsarten zum Einsatz. Als besonders vorteilhaft erweist sich in diesem Zusammenhang eine Verschraubung.

Gemäß einer konstruktiv zu bevorzugenden Weiterbildung der Erfindung ist an zumindest einer der Flanschflächen ein aus mehreren Langlöchern gebildetes Lochbild vorgesehen, um eine Verschraubung mit einer gegenüberliegenden Flanschfläche in unterschiedlichen Drehzuständen bezogen auf die Stellachse zu ermöglichen. Eine solche Ausgestaltung bietet in der Praxis den Vorteil, dass sich das Verbindungselement in einem vormontierten Zustand der Verbundlenkerachse um dessen Stellachse drehen lässt, um die gewünschte Einstellung von Spurwinkel und/oder Sturzwinkel vorzunehmen.

Wie bereits eingangs erwähnt, kommt die Erfindung insbesondere zum Einsatz an einer Verbundlenkerachse, bei welcher jedem der Längslenker eine vorzugsweise elektrische Antriebseinheit - beispielsweise in Form eines Elektromotors - zugeordnet ist, insbesondere in diesen integriert ist, um ein dem Längslenker zugeordnetes Rad antreiben zu können. Dabei kann weiterhin in jeden der Längslenker zusätzlich eine Getriebeeinheit integriert sein, die eine mit der Antriebseinheit erzeugte Drehzahl in eine für das angetriebene Rad geeignete Abtriebsdrehzahl übersetzt.

Die Erfindung wird nachfolgend anhand einer Zeichnung näher erläutert. Daraus ergeben sich auch weitere vorteilhafte Ausgestaltungen und Wirkungen der Erfindung. In der Zeichnung zeigt:
- Figur 1: eine Draufsicht auf einen Teil einer erfindungsgemäßen Verbundlenkerachse gemäß einem ersten Ausführungsbeispiel der Erfindung in Explosionsdarstellung,
- Figur 2: einen Teil einer Verbundlenkerachse wie in Figur 1, in perspektivischer Ansicht,
- Figur 3: einen Teil einer Verbundlenkerachse in Draufsicht gemäß einem zweiten Ausführungsbeispiel der Erfindung in Explosionsdarstellung,
- Figur 4: einen Teil einer Verbundlenkerachse wie in Figur 3, in perspektivischer Ansicht,
- Figur 5: einen Teil einer Verbundlenkerachse in Draufsicht gemäß einem dritten Ausführungsbeispiel der Erfindung in Explosionsdarstellung,
- Figur 6: einen Teil einer Verbundlenkerachse wie in Figur 5, in perspektivischer Ansicht.

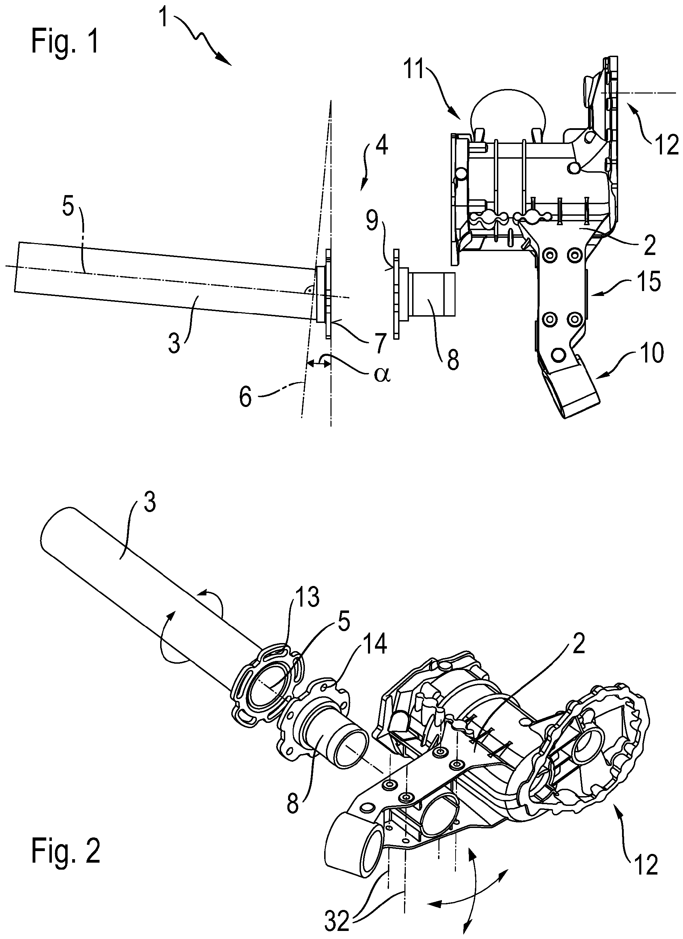

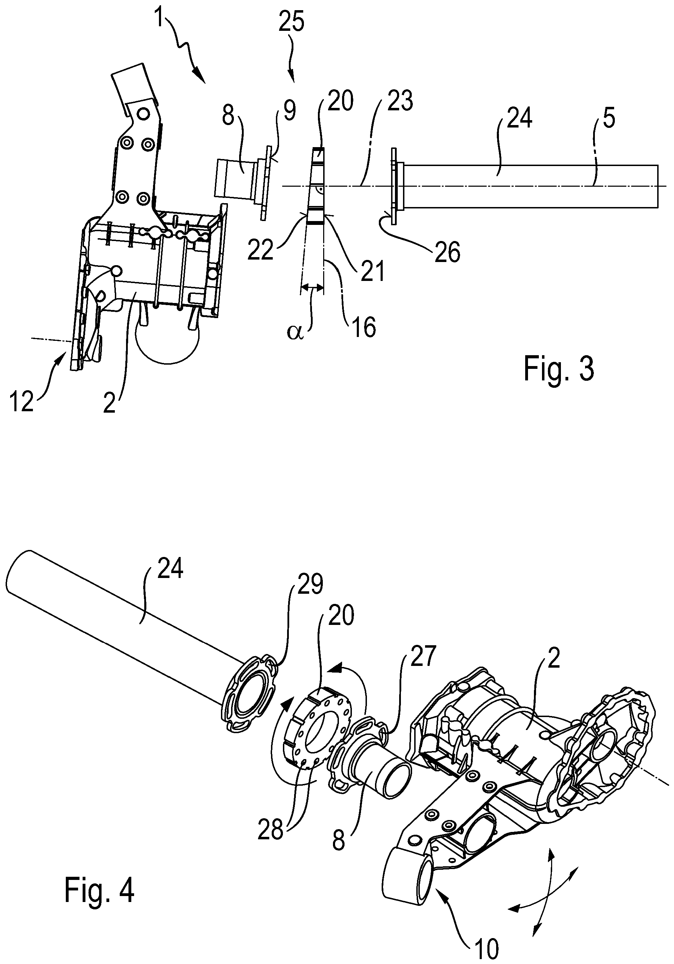

Figur 1 zeigt in Draufsicht einen Teil einer Verbundlenkerachse 1 gemäß einem ersten Ausführungsbeispiel der Erfindung. Wie der Figur 1 zu entnehmen, umfasst die Verbundlenkerachse 1 einen Torsionsstab 3, der endseitig jeweils mit einem Längslenker 2 verbunden ist. Wie auch in den übrigen Figuren 2 bis 6 ist die Verbundlenkerachse 1 aus Darstellungsgründen nur in einem Halbschnitt gezeigt. Dementsprechend ist ein Torsionsstab 3 (beziehungsweise in Figur 3 und 4 der Torsionsstab 24) nicht vollständig, sondern nur in seinem seitlichen Endbereich dargestellt. Dementsprechend ist der Torsionsstab 3 an seinem in Figur 1 nicht gezeigten gegenüberliegenden Ende ebenfalls mit einem Längslenker 2 verbunden, wobei die beiden Längslenker 2 bezogen auf eine zur Fahrzeuglängsrichtung (X-Achse) parallelen Längsmittelebene spiegelsymmetrisch zueinander ausgerichtet sind, um eine Verbundlenkerachse zu bilden.

Zur Verbindung des Längslenkers 2 mit dem Torsionsstab 3 dient eine Flanschverbindung 4, die auf besondere, nachfolgend zu beschreibende Weise ausgestaltet ist. Gemäß dem in den Figuren 1 und 2 gezeigten ersten Ausführungsbeispiel ist an dem Torsionsstab 3 eine Flanschfläche 7 ausgebildet, die gegenüber einer zur Längsachse 5 des Torsionsstabs 3 senkrechten Ebene 6 um einen Winkel α geneigt ist. Der Torsionsstab 3 ist als im Wesentlichen rotationssymmetrisches Bauteil ausgeführt, wobei die Flanschfläche 7 an ein abgeschrägtes Ende des Torsionsstabs 3 beispielsweise angeschweißt ist. Wie in Figur 2 zu sehen, hat die Flanschfläche 7 eine im Wesentlichen runde Grundform, und an dieser sind fünf Langlöcher 13 über den Umfang verteilt angeordnet. Das sich daraus ergebende Lochbild korrespondiert mit Befestigungslöchern 14, die an einer Flanschfläche 9 einer Hülse 8 ausgebildet sind. Bei Anlage der Flanschfläche 7 des Torsionsstabs 3 an der Flanschfläche 9 der Hülse 8 lassen sich die Langlöcher 13 mit den Löchern 14 in verschiedenen Drehstellungen des Torsionsstabs 3 gegenüber der Hülse 8 so in Deckung bringen, dass sich der Torsionsstab 3 mit der Hülse 8 mittels Schrauben (nicht dargestellt) verbinden lässt, welche durch die Langlöcher 13 und die Löcher 14 hindurchgeführt und verschraubt werden. Der Torsionsstab 3 ist damit - innerhalb durch Lochbild vorgegebener Grenzen - um dessen Längsachse 5 drehbar und in verschiedenen Drehstellungen feststellbar. Da die am Torsionsstab 3 ausgebildete Flanschfläche 7 gegenüber einer zur Längsachse 5 des Torsionsstabs 3 senkrechten Ebene 6 um den Winkel a geneigt ist, lässt sich durch Drehen des Torsionsstabs 3 um die Stellachse 5 die Winkellage zwischen Längslenker 2 und Torsionsstab 3 beeinflussen. Insbesondere lässt sich, wie in Fig. 2 durch gekrümmte Doppelpfeile angedeutet, durch Verdrehen des Torsionsstabs 3 um dessen Längsachse 5 ein Spurwinkel und/oder ein Sturzwinkel der Verbundlenkerachse 1 einstellen.

Die Hülse 8 ist als ein bezogen auf den Torsionsstab 3 und den Längslenker 2 separates Bauteil ausgeführt und weist an ihrem der Flanschfläche 9 abgewandten Ende einen zylinderförmigen Abschnitt auf. Dieser zylinderförmige Abschnitt der Hülse 8 lässt sich in eine am Längslenker 2 ausgebildete Aufnahme 15 einführen und im eingeführten Zustand darin festklemmen. Dazu sind an dem Gehäuse des Längslenkers 2 vier Schraublöcher 32 vorgesehen, mit denen sich die Aufnahme 15, die eine obere und eine untere Anlagefläche umfasst, im Querschnitt verkleinern lässt, um so die Hülse 8 durch Kraftschluss (Schraubklemmung) am Längslenker 2 zu befestigen. Es ist somit möglich, die Hülse 8 verschieden weit (bezogen auf die axiale Erstreckung des zylindrischen Abschnitts) in die Aufnahme 15 einzuführen. So lässt sich bedarfsweise auch die Spurweite der Verbundlenkerachse 1 einstellen.

Im gezeigten Ausführungsbeispiel verläuft die Flanschfläche 9 der Hülse 8 exakt im rechten Winkel zur Längsachse der Hülse 8. Es wäre denkbar, dass auch die Flanschfläche 9 einen davon abweichenden Neigungswinkel (Abweichung gegenüber 90 Grad bezogen auf die Längsachse der Hülse 8) aufweist. In diesem Fall ließe sich auch durch Drehung der Hülse 8 um deren Längsachse der Spurwinkel und/ oder der Sturzwinkel der Verbundlenkerachse 1 beeinflussen.

Der Längslenker 2 ist als ein Aluminiumsandgussteil ausgeführt und weist einen Endes eine Lageraufnahme 10 auf, an welcher die Verbundlenkerachse 1 gegenüber einem (hier nicht gezeigten) Fahrzeugaufbau eines Fahrzeugs gelagert werden kann. In einem der Lageraufnahme 10 gegenüberliegenden Bereich des Längslenkers 2 weitet sich dieser zu einem annähernd zylinderförmigen Abschnitt, um einen durch das Bezugszeichen 11 angedeuteten Elektromotor aufzunehmen. Der Elektromotor 11 dient dazu, über eine Getriebeeinheit ein Rad 12 anzutreiben, dessen Anbindung in der Zeichnung vereinfacht durch den Verlauf der zugehörigen Abtriebswelle angedeutet ist.

Figur 3 zeigt in einer Draufsicht einen Teil einer Verbundlenkerachse 1 gemäß einem zweiten Ausführungsbeispiel der Erfindung. Die Ausgestaltung des Längslenkers 2 einschließlich der Aufnahme 15 gleicht dabei der Gestaltung des Längslenkers 2 gemäß dem ersten Ausführungsbeispiel. Zur Vermeidung von Wiederholungen wird diesbezüglich auf die Beschreibung zu den Figuren 1 und 2 verwiesen. Vom ersten Ausführungsbeispiel abweichend ist beim zweiten Ausführungsbeispiel, wie in den Figuren 3 und 4 gezeigt, eine am Torsionsstab 24 ausgebildete Flanschfläche 26 genau im rechten Winkel zur Längsachse 5 des Torsionsstabs 24 ausgebildet. Die hier zum Einsatz kommende Flanschverbindung 25 weist dafür ein Verbindungselement 20 auf, dass als ein bezogen auf den Torsionsstab 24 und den Längslenker 2 zusätzliches Bauteil in Form einer Winkelscheibe 20 ausgeführt ist. Die Winkelscheibe 20 weist eine Flanschfläche 22 auf, die gegenüber einer zu einer Stellachse 23 senkrechten Ebene 16 um den Winkel α geneigt ist. Es handelt sich bei der Winkelscheibe 20 um ein ringförmiges Bauteil, dass zwischen die Hülse 8 und den Torsionsstab 24 eingelegt ist. Gemäß Figur 3 weist die Winkelscheibe 20 eine Keilform auf, wobei im gezeigten Ausführungsbeispiel eine innere Flanschfläche 21, die mit einer am Torsionsstab 24 ausgebildeten Flanschfläche 26 in Anlage kommt, exakt parallel zur Radialebene 16 ausgerichtet ist. Hingegen ist die der inneren Flanschfläche 21 gegenüber liegende äußere Flanschfläche 22 der Winkelscheibe 20 um den Winkel α gegenüber der senkrechten Ebene 16 geneigt. Die äußere Flanschfläche 22 dient im gezeigten Ausführungsbeispiel zur mittelbaren Befestigung am Längslenker 2, indem nämlich die äußere Flanschfläche 22 mit der Flanschfläche 9 der Hülse 8 zur Anlage kommt und die Hülse 8 - wie im zuvor beschriebenen ersten Ausführungsbeispiel - mittels der am Längslenker 2 ausgebildeten Aufnahme 15 an diesem befestigt ist. Wie in Figur 4 zu sehen, sind an der Winkelscheibe 20 eine Vielzahl umfänglich angeordneter Befestigungslöcher 28 ausgebildet, die mit einer Vielzahl umfänglich angeordneter Befestigungslöcher 27 bzw. 29 korrespondiert, die an dem Torsionsstab 24 bzw. der Hülse 8 ausgebildet sind.

Es sei angemerkt, dass gemäß dem gezeigten Ausführungsbeispiel der Figuren 3 und 4 lediglich die Flanschfläche 22 der Winkelscheibe 20 die Winkelabweichung a aufweist. Die dem Torsionsstab 24 zugeordnete Flanschfläche 26 hingegen weist in diesem Ausführungsbeispiel keine Winkelabweichung auf. Die Einstellung des Spur- und/oder Sturzwinkels erfolgt demnach rein über eine Drehung der Winkelscheibe 20. Da der Torsionsstab 24 zur Einstellung folglich nicht gedreht zu werden braucht, sondern seine Ausrichtung beibehält, könnte der Torsionsstab 24 eine von der dargestellten rotationssymmetrischen Form abweichende (nicht-rotationssymmetrische) Form aufweisen, insbesondere um dieses für bevorzugte Belastungen optimiert zu gestalten.

Ergänzend oder alternativ wäre es denkbar, dass weitere der Flanschflächen 9, 21, 26 eine Winkelabweichung bezogen auf die Längsachse des zugehörigen Bauteils 8, 20, 24 aufweisen, wodurch eine weitere Einflussnahme auf die Winkellage zwischen Längslenker 2 und Torsionsstab 24 gegeben wäre.

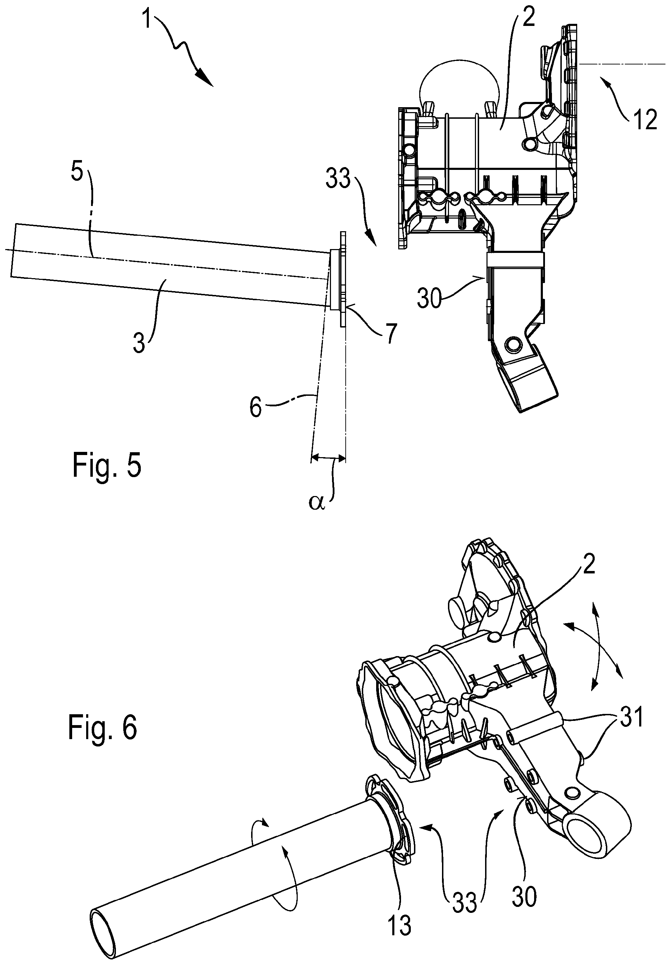

In den Figuren 5 und 6 ist eine Verbundlenkerachse 1 gemäß einem dritten Ausführungsbeispiel dargestellt. Bezüglich der Gestaltung des Torsionsstabs 3 sowie des Längslenkers 2 entspricht diese Verbundlenkerachse in wesentlichen Merkmalen der des ersten Ausführungsbeispiels. Zur Vermeidung von Wiederholungen wird auf die entsprechende Beschreibung verwiesen. Davon abweichend umfasst die zur Verbindung von Torsionsstab 3 und Längslenker 2 dienende Flanschverbindung 33 eine unmittelbar am Längslenker 2 ausgebildete Flanschfläche 30. Demzufolge ist der Torsionsstab 5 mittels seiner daran ausgebildeten Flanschfläche 7 in direktem Kontakt mit der am Längslenker 2 ausgebildeten Flanschfläche 30. Zur Befestigung weist der Längslenker 2 fünf Befestigungslöcher 31 auf, die mit an der Flanschfläche 7 des Torsionsstabs 3 ausgebildeten Langlöchern 13 korrespondieren, so dass sich der Torsionsstab 3 in unterschiedlichen Drehstellungen an dem Längslenker 2 befestigen lässt. Wie im ersten Ausführungsbeispiel weist auch im dritten Ausführungsbeispiel die Flanschfläche 7 einen Neigungswinkel a gegenüber der senkrechten Ebene 6 des Torsionsstabs 3 auf. Somit lässt sich durch Änderung der Drehstellung des Torsionsstabs 3 die Winkellage zwischen Längslenker 2 und Torsionsstab 3 beeinflussen, wie durch die in Figur 6 angegebenen Doppelpfeile angedeutet.

Abschließend sei angemerkt, dass die beschriebene Verbundlenkerachse abhängig von der jeweiligen Ausgestaltung verschiedene Einstellmöglichkeiten bietet, insbesondere lassen sich der Sturzwinkel und der Spurwinkel, sowie gemäß dem ersten und zweiten Ausführungsbeispiel auch die Spurweite der Verbundlenkerachse einstellen, ohne dass hierzu eine Bearbeitung oder zusätzliche Bauteile erforderlich sind.

### Bezugszeichen

- 1: Achse
- 2: Längslenker
- 3: Torsionsstab
- 4: Flanschverbindung
- 5: Stellachse Torsionsstab
- 6: senkrechte Ebene
- 7: Flanschfläche
- 8: Hülse
- 9: Flanschfläche
- 10: Lageraufnahme
- 11: Elektromotor
- 12: Rad
- 13: Langloch
- 14: Loch
- 15: Klemmaufnahme
- 16: senkrechte Ebene
- 20: Winkelscheibe
- 21: innere Flanschfläche
- 22: äußere Flanschfläche
- 23: Stellachse Winkelscheibe
- 24: Torsionsstab
- 25: Flanschverbindung
- 26: Flanschfläche
- 27: Langloch
- 28: Durchgangsbohrung
- 29: Langloch
- 30: Flanschfläche
- 31: Befestigungslöcher
- 32: Schraublöcher
- 33: Flanschverbindung
- α: Winkel

## Patentansprüche

1. Verbundlenkerachse (1) für ein Fahrzeug mit zwei gegenüberliegenden Längslenkern (2), die mittels eines Torsionsstabs (3; 24) miteinander verbunden sind, wobei zur Verbindung eines Längslenkers (2) mit dem Torsionsstab (3; 24) jeweils eine Flanschverbindung (4; 25; 33) dient,
**dadurch gekennzeichnet, dass** die Flanschverbindung (4; 25; 33) zumindest ein Verbindungselement (3; 20) aufweist, das um eine Stellachse (5; 23) drehbar und feststellbar ist, wobei an dem Verbindungselement (3; 20) wenigstens eine Flanschfläche (7; 22) ausgebildet ist, die gegenüber einer zur Stellachse (5; 23) des Verbindungselements (3; 20) senkrechten Ebene (6; 16) um einen Winkel (a) geneigt ist, um die Winkellage zwischen Längslenker (2) und Torsionsstab (3; 24) durch Drehen des Verbindungselements (3; 20) um die Stellachse (5; 23) beeinflussen zu können.

2. Verbundlenkerachse nach Anspruch 1, **dadurch gekennzeichnet, dass** an jedem der beiden Längslenker (2) eine Radachse zur Aufnahme eines Rades (12) des Fahrzeugs lagerbar ist, so dass sich durch Verdrehen des Verbindungselements (3; 20) um die Stellachse (5; 23) ein Spurwinkel und/oder ein Sturzwinkel der Verbundlenkerachse (1) beeinflussen lässt.

3. Verbundlenkerachse nach Anspruch 1 oder 2, **dadurch gekennzeichnet, dass** das Verbindungselement Teil des Torsionsstabs (3) ist, indem eine am Torsionsstab (3) ausgebildete Flanschfläche (7) um einen Winkel (a) gegenüber einer zur Längsachse (5) des Torsionsstabs (3) senkrechten Ebene (6) geneigt ist, wobei der Torsionsstab (3) um dessen Längsachse (5) drehbar und feststellbar ist.

4. Verbundlenkerachse nach Anspruch 1 oder 2, **dadurch gekennzeichnet, dass** das Verbindungselement als ein bezogen auf den Torsionsstab (24) und die Längslenker (2) zusätzliches Bauteil in Form einer Winkelscheibe (20) mit einer Flanschfläche (22) ausgeführt ist, die gegenüber einer zu einer Stellachse (23) senkrechten Ebene (16) um den Winkel (a) geneigt ist.

5. Verbundlenkerachse nach Anspruch 4, **dadurch gekennzeichnet, dass** die Winkelscheibe (20) eine innere Flanschfläche (21) zur Befestigung an dem Torsionsstab (24) und eine äußere Flanschfläche (22) zur mittelbaren oder unmittelbaren Befestigung an einem Längslenker (2) aufweist.

6. Verbundlenkerachse nach Anspruch 4 oder 5, **dadurch gekennzeichnet, dass** an der Winkelscheibe (20) eine Vielzahl umfänglich angeordneter Befestigungslöcher (28) ausgebildet ist, die mit einer Vielzahl umfänglich angeordneter Befestigungslöcher (27, 29) korrespondiert, die an dem Torsionsstab (24) und/oder an einer dem Längslenker (2) zugeordneten Flanschfläche (9) ausgebildet ist.

7. Verbundlenkerachse nach einem der vorigen Ansprüche, **dadurch gekennzeichnet, dass** die Flanschverbindung (4; 25) eine dem Längslenker (2) zugeordnete Flanschfläche (9) aufweist, die an einer Hülse (8) ausgebildet ist, wobei die Hülse (8) einen vorzugsweise zylinderförmigen Abschnitt aufweist, der in eine am Längslenker (2) ausgebildete Aufnahme (15) einführbar und im eingeführten Zustand darin feststellbar ist, um eine kraftschlüssige, formschlüssige und/oder stoffschlüssige Verbindung zwischen Hülse (8) und Längslenker (2) herzustellen.

8. Verbundlenkerachse nach Anspruch 7, **dadurch gekennzeichnet, dass** die Hülse als Verbindungselement dient, indem die an der Hülse ausgebildete Flanschfläche gegenüber einer zur Längsachse der Hülse senkrechten Ebene um einen Winkel geneigt ist.

9. Verbundlenkerachse nach Anspruch 7 oder 8, **dadurch gekennzeichnet, dass** sich die Hülse (8) zur Einstellung einer Spurweite der Verbundlenkerachse (1) verschieden weit in die Aufnahme (15) einführen und darin feststellen lässt.

10. Verbundlenkerachse nach einem der Ansprüche 1 bis 6, **dadurch gekennzeichnet, dass** die Flanschverbindung (33) eine unmittelbar am Längslenker (2) ausgebildete Flanschfläche (30) umfasst.

11. Verbundlenkerachse nach einem der vorigen Ansprüche, **dadurch gekennzeichnet, dass** die Flanschverbindung zwischen Längslenker und Torsionsstab mehrere, insbesondere zwei Verbindungselemente mit jeweils geneigter Flanschfläche aufweist, die unabhängig voneinander um eine jeweilige Stellachse drehbar sind.

12. Verbundlenkerachse nach einem der vorigen Ansprüche, **dadurch gekennzeichnet, dass** der Torsionsstab (3) als ein im Wesentlichen rotationssymmetrisches Bauteil ausgeführt ist.

13. Verbundlenkerachse nach einem der vorigen Ansprüche, **dadurch gekennzeichnet, dass** zur Feststellung des Verbindungselements (3; 20) in einer gewünschten Drehstellung um die Stellachse (5; 23) eine formschlüssige und/oder kraftschlüssige Verbindung, bevorzugt eine Verschraubung dient.

14. Verbundlenkerachse nach einem der vorigen Ansprüche, **dadurch gekennzeichnet, dass** an zumindest einer der Flanschflächen (7, 9, 21, 26) ein aus mehreren Langlöchern (13, 27, 29) gebildetes Lochbild vorgesehen ist, um eine Verschraubung mit einer gegenüberliegenden Flanschfläche (9, 7, 26, 21, 30) in unterschiedlichen Drehzuständen des Verbindungselements (3; 20) bezogen auf die Stellachse (5; 23) zu ermöglichen.

15. Verbundlenkerachse nach einem der vorigen Ansprüche, **dadurch gekennzeichnet, dass** jedem der Längslenker (2) eine vorzugsweise elektrische Antriebseinheit (11) zugeordnet, insbesondere in diesen integriert ist, um ein dem Längslenker (2) zugeordnetes Rad (12) antreiben zu können.

## Claims

1. Torsion beam axle (1) for a vehicle having two trailing arms (2) which lie opposite one another and are connected to one another by means of a torsion bar (3; 24), in each case one flange connection (4; 25; 33) serving to connect a trailing arm (2) to the torsion bar (3; 24), **characterized in that** the flange connection (4; 25; 33) has at least one connecting element (3; 20) which can be fixed and can be rotated about an actuating axis (5; 23), at least one flange face (7; 22) being configured on the connecting element (3; 20), which flange face (7; 22) is inclined by an angle (α) with respect to a plane (6; 16) which is perpendicular with respect to the actuating axis (5; 23) of the connecting element (3; 20), in order for it to be possible to influence the angular position between the trailing arm (2) and the torsion bar (3; 24) by way of rotation of the connecting element (3; 20) about the actuating axis (5; 23).

2. Torsion beam axle according to Claim 1, **characterized in that** a wheel axle for receiving a wheel (12) of the vehicle can be mounted on each of the two trailing arms (2), with the result that a toe angle and/or a camber angle of the torsion beam axle (1) can be influenced by way of rotation of the connecting element (3; 20) about the actuating axis (5; 23).

3. Torsion beam axle according to Claim 1 or 2, **characterized in that** the connecting element is part of the torsion bar (3), by a flange face (7) which is configured on the torsion bar (3) being inclined by an angle (α) with respect to a plane (6) which is perpendicular with respect to the longitudinal axis (5) of the torsion bar (3), it being possible for the torsion bar (3) to be fixed and to be rotated about its longitudinal axis (5).

4. Torsion beam axle according to Claim 1 or 2, **characterized in that** the connecting element is configured as an additional component in relation to the torsion bar (24) and the trailing arms (2), in the form of an angled plate (20) with a flange face (22) which is inclined by the angle (α) with respect to a plane (16) which is perpendicular with respect to an actuating axis (23).

5. Torsion beam axle according to Claim 4, **characterized in that** the angled plate (20) has an inner flange face (21) for fastening to the torsion bar (24) and an outer flange face (22) for indirect or direct fastening to a trailing arm (2).

6. Torsion beam axle according to Claim 4 or 5, **characterized in that** a multiplicity of circumferentially arranged fastening holes (28) are configured on the angled plate (20) which corresponds with a multiplicity of circumferentially arranged fastening holes (27, 29) which are configured on the torsion bar (24) and/or on a flange face (9) which is assigned to the trailing arm (2).

7. Torsion beam axle according to one of the preceding claims, **characterized in that** the flange connection (4; 25) has a flange face (9) which is assigned to the trailing arm (2) and is configured on a sleeve (8), the sleeve (8) having a preferably cylindrical section which can be introduced into a receptacle (15) which is configured on the trailing arm (2) and, in the introduced state, can be fixed therein, in order to establish a non-positive, positively locking and/or integrally joined connection between the sleeve (8) and the trailing arm (2).

8. Torsion beam axle according to Claim 7, **characterized in that** the sleeve serves as a connecting element, by the flange face which is configured on the sleeve being inclined by an angle with respect to a plane which is perpendicular with respect to the longitudinal axis of the sleeve.

9. Torsion beam axle according to Claim 7 or 8, **characterized in that**, in order to set a track of the torsion beam axle (1), the sleeve (8) can be introduced to a different extent into the receptacle (15) and can be fixed therein.

10. Torsion beam axle according to one of Claims 1 to 6, **characterized in that** the flange connection (33) comprises a flange face (30) which is configured directly on the trailing arm (2).

11. Torsion beam axle according to one of the preceding claims, **characterized in that** the flange connection between the trailing arm and the torsion bar has a plurality of, in particular two, connecting elements with a respective inclined flange face, which connecting elements can be rotated about a respective actuating axis independently of one another.

12. Torsion beam axle according to one of the preceding claims, **characterized in that** the torsion bar (3) is configured as a substantially rotationally symmetrical component.

13. Torsion beam axle according to one of the preceding claims, **characterized in that** a positively locking and/or non-positive connection, preferably a screw connection, serves to fix the connecting element (3; 20) in a desired rotational position about the actuating axis (5; 23).

14. Torsion beam axle according to one of the preceding claims, **characterized in that** a hole pattern which is formed from a plurality of slots (13, 27, 29) is provided on at least one of the flange faces (7, 9, 21, 26), in order to enable a screw connection to an opposite flange face (9, 7, 26, 21, 30) in different rotational states of the connecting element (3; 20) in relation to the actuating axis (5; 23).

15. Torsion beam axle according to one of the preceding claims, **characterized in that** a preferably electric drive unit (11) is assigned to, in particular is integrated into, each of the trailing arms (2), in order for it to be possible for a wheel (12) which is assigned to the trailing arm (2) to be driven.

## Revendications

1. Essieu de torsion (1), destiné à un véhicule, comprenant deux bras oscillant longitudinaux opposés (2) qui sont reliés entre eux au moyen de barres de torsion (3 ; 24), une liaison à bride (4 ; 25 ; 33) étant utilisée pour relier un bras oscillant longitudinal (2) à la barre de torsion (3 ; 24), **caractérisé en ce que** la liaison à bride (4 ; 25 ; 33) comporte au moins un élément de liaison (3 ; 20) qui peut être immobilisé et qui peut tourner autour d'un axe de réglage (5 ; 23), au moins une surface de bride (7 ; 22) étant prévue au niveau de l'élément de liaison (3 ; 20), laquelle surface de bride est inclinée d'un angle (α) par rapport à un plan (6 ; 16) perpendiculaire à l'axe de réglage (5 ; 23) de l'élément de liaison (3 ; 20) pour pouvoir influer sur la position angulaire entre le bras oscillant longitudinal (2) et la barre de torsion (3 ; 24) par rotation de l'élément de liaison (3 ; 20) autour de l'axe de réglage (5 ; 23) .

2. Essieu de torsion selon la revendication 1, **caractérisé en ce qu'**un axe de roue destiné à recevoir une roue (12) du véhicule peut être monté sur chacun des deux bras oscillants longitudinaux (2) de manière à pouvoir influer sur un angle de pincement et/ou un angle de carrossage de l'axe de torsion (1) par rotation de l'élément de liaison (3 ; 20) autour de l'axe de réglage (5 ; 23) .

3. Essieu de torsion selon la revendication 1 ou 2, **caractérisé en ce que** l'élément de liaison fait partie de la barre de torsion (3) **en ce qu'**une surface de bride (7), prévue sur la barre de torsion (3), est inclinée d'un angle (α) par rapport à un plan (6) perpendiculaire à un axe longitudinal (5) de la barre de torsion (3), la barre de torsion (3) pouvant être immobilisée et pouvant tourner autour de son axe longitudinal (5).

4. Essieu de torsion selon la revendication 1 ou 2, **caractérisé en ce que** l'élément de liaison est réalisé comme composant supplémentaire par rapport à la barre de torsion (24) et aux bras oscillants longitudinaux (2) sous la forme d'une plaque angulaire (20) pourvue d'une surface de bride (22) qui est inclinée de l'angle (α) par rapport à un plan (16) perpendiculaire à un axe de réglage (23).

5. Essieu de torsion selon la revendication 4, **caractérisé en ce que** la plaque angulaire (20) présente une surface de bride intérieure (21) destinée à être fixée à la barre de torsion (24) et une surface de bride extérieure (22) destinée à être fixée directement ou indirectement à un bras oscillant longitudinal (2).

6. Essieu de torsion selon la revendication 4 ou 5, **caractérisé en ce qu'**une pluralité de trous de fixation (28), disposés de manière périphérique, sont ménagés au niveau de la plaque angulaire (20), lesquels trous de fixation correspondent à une pluralité de trous de fixation (27, 29) qui sont disposés de manière périphérique et qui sont ménagés au niveau de la barre de torsion (24) et/ou d'une surface de bride (9) associée au bras oscillant longitudinal (2).

7. Essieu de torsion selon l'une des revendications précédentes, **caractérisé en ce que** la liaison par bride (4 ; 25) possède une surface de bride (9), associée au bras oscillant longitudinal (2), qui est formée au niveau d'un manchon (8), le manchon (8) comportant une partie, de préférence cylindrique, qui peut être insérée dans un logement (15) formé au niveau du bras oscillant longitudinal (2) et qui peut être immobilisée à l'intérieur de celui-ci à l'état inséré pour réaliser une liaison en force, une liaison par complémentarité de formes et/ou une liaison de matière entre le manchon (8) et le bras oscillant longitudinal (2).

8. Essieu de torsion selon la revendication 7, **caractérisé en ce que** le manchon sert d'élément de liaison **en ce que** la surface de bride formée au niveau du manchon est inclinée d'un angle par rapport à un plan perpendiculaire à l'axe longitudinal du manchon.

9. Essieu de torsion selon la revendication 7 ou 8, **caractérisé en ce que** le manchon (8) peut être plus ou moins inséré dans le logement (15) et immobilisé à l'intérieur de celui-ci pour régler l'écartement des roues de l'axe de torsion (1).

10. Essieu de torsion selon l'une des revendications 1 à 6, **caractérisé en ce que** la liaison par bride (33) comprend une surface de bride (30) formée directement au niveau du bras oscillant longitudinal (2).

11. Essieu de torsion selon l'une des revendications précédentes, **caractérisé en ce que** la liaison par bride entre le bras oscillant longitudinal et la barre de torsion comporte une pluralité, en particulier deux éléments de liaison possédant chacun une surface de bride inclinée, lesquels peuvent tourner indépendamment les uns des autres autour d'un axe de réglage respectif.

12. Essieu de torsion selon l'une des revendications précédentes, **caractérisé en ce que** la barre de torsion (3) est conçue comme un composant sensiblement à symétrie de révolution.

13. Essieu de torsion selon l'une des revendications précédentes, **caractérisé en ce qu'**une liaison par complémentarité de formes et/ou en force, de préférence une liaison par vissage, est utilisée pour immobiliser l'élément de liaison (3 ; 20) dans une position de rotation souhaitée autour de l'axe de réglage (5 ; 23).

14. Essieu de torsion selon l'une des revendications précédentes, **caractérisé en ce qu'**une image de trou formée de plusieurs trous longs (13, 27, 29) est prévue au niveau de l'une au moins des surfaces de bride (7, 9, 21, 26) pour permettre un vissage avec une surface de bride opposée (9, 7, 26, 21, 30) dans différents états de rotation de l'élément de liaison (3 ; 20) par rapport à l'axe de réglage (5 ; 23).

15. Essieu de torsion selon l'une des revendications précédentes, **caractérisé en ce qu'**une unité d'entraînement (11), de préférence électrique, est associée à chacun des bras oscillants longitudinaux (2), en particulier intégrée dans celui-ci, pour pouvoir entraîner une roue (12) associée au bras oscillant longitudinal (2).
